# EUROPEAN PATENT APPLICATION

(11) **EP 1 806 204 A1**
(43) Date of publication of application: **11.07.2007**
(21) Application number: 07100203.4
(22) Date of filing: 08.01.2007
(51) Int. Cl.: B23K 37/00, B23P 6/04, C21D 1/40, C21D 9/00, F01D 5/00, H05B 3/14, H05B 3/48, B23K 101/00

(54) **Apparatus and method for welding superalloys**

(30) Priority: 06.01.2006 US 326801
(71) Applicant: Honeywell International Inc., Morristown, NJ 07962 (US)
(72) Inventor: Taylor, Clyde R., Laurens, SC 29360 (US); Roberts, Alan G Jr., Moore, SC 29369 (US)
(74) Representative: Haley, Stephen

(57) **Abstract**

A heating apparatus (200) is provided for use during a welding Operation on a component. In one embodiment, the apparatus (200) includes a die (202) having a cavity (206) having at least a portion shaped to complement a first portion of the component and an opening (212) providing a space through which a second portion of the component extends. A primary heating element (214) is embedded in the die (202) and generates heat upon being energized. A die temperature sensor (216) is embedded in the die (202) proximate the primary heating element (214) and senses primary heating element temperature and supplies a temperature signal representative thereof. A component temperature sensor (218) is embedded in the die (202), and senses a temperature of the component in the cavity (206) and supplies a temperature signal representative thereof. A controller (220) couples to receive the temperature signals and is operable, in response thereto, to selectively energize and de-energize the primary heating element (214).

## Description

Because fuel efficiency increases as engine operating temperatures increase, engine components such as the turbine engine blades and vanes are typically fabricated from high temperature materials such as nickel-based superalloys. However, although nickel-based superalloys have good high temperature properties and many other advantages, they are susceptible to corrosion, oxidation, thermal fatigue and erosion wear in the high temperature environment of an operating turbine engine. In such cases, the component may need to be repaired, such as, by welding.

Before welding is performed, the worn component preferably undergoes a heat treatment to relieve stresses that may be produced during welding. These stresses may be generated as a result of a sharp temperature gradient between a weld area and an adjacent non-weld area. Typically, during the heat treatment, the worn component is either placed in an area or chamber and gas, for example, air, surrounding the component is heated using halogen heat lamps, induction coils, or silicon carbide furnace elements. However, it has been found that cracks may form in the weld or non-weld areas when the component cools after the treatment.

Hence, there is a need for an improved method and apparatus for beating a worn engine component during a welding repair process. It is desirable for the method and apparatus to heat and cool the component in a controlled manner. Moreover, it is desirable to produce a repaired component that has substantially no cracks.

The present invention provides a heating apparatus for use during performance of a welding operation on a component In one embodiment, and by way of example only, the apparatus includes a die, a primary heating element, a die temperature sensor, a component temperature sensor, and a controller. The die has an inner surface defining a cavity and an opening. The cavity has at least a portion shaped to complement a first portion of the component and the opening is configured to provide a space through which a second portion of the component extends. The primary heating element is embedded in the die and configured to generate heat upon being energized. The die temperature sensor is embedded in the die proximate the primary heating element and is configured to sense primary heating element temperature and supply a primary heating element temperature signal representative thereof. The component temperature sensor is embedded in the die, and configured to sense a temperature of the component in the cavity and supply a component temperature signal representative thereof. The controller is coupled to receive the primary heating element temperature signal and the component temperature signal and is operable, in response thereto, to selectively energize and de-energize the primary heating element.

In another embodiment, and by way of example only, the heating apparatus includes a die, a primary heating element, a die temperature sensor, a component temperature sensor, a controller, and a secondary heating element. The die has an inner surface defining a cavity and an opening. The cavity has at least a portion shaped to complement a first portion of the component and the opening is configured to provide a space through which a second portion of the component extends. The primary heating element is embedded in the die, and configured to generate heat in excess of about 1800°F, upon being energized. The die temperature sensor is embedded in the die proximate the primary heating element, configured to sense primary heating element temperature and supply a primary heating element temperature signal representative thereof. The component temperature sensor is embedded in the die, and configured to sense a temperature of a composed in the cavity and supply a component temperature signal representative thereof. The controller is coupled to receive the primary heating element temperature signal and the component temperature signal and is operable, in response thereto, to selectively energize and de-energize the primary heating element. The secondary heating element is embedded in the die remote from the primary heating element and is configured to generate heat in excess of about 800°F, upon being energized.

Other independent features and advantages of the preferred apparatus and method will become apparent from the following detailed description, taken in conjunction with the accompanying drawings which illustrate, by way of example, the principles of the invention.

### In the Drawings:

FIG, 1 is a perspective view of an exemplary turbine blade;
FIG. 2 is a top perspective view of a portion of an exemplary heating apparatus that may be used to heat the turbine blade of FIG. 1 during a welding operation;
FIG. 3 is a perspective view of a two-section die that may be used as part of the heating apparatus depicted in FIG. 2; and
FIG. 4 is a perspective view of the complete exemplary heating apparatus shown in FIG. 3.

The following detailed description of the invention is merely exemplary in nature and is not intended to limit the invention or the application and uses of the invention. Furthermore, there is no intention to be bound by any theory presented in the preceding background of the invention or the following detailed description of the invention.

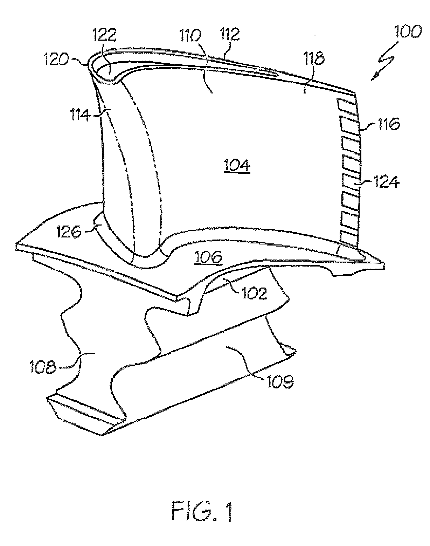

FIG. 1 illustrates an exemplary aircraft jet engine turbine rotor blade 100 that includes a shank 102 and an airfoil 104. The shank 102 includes a platform 106 and a root 108. The platform 106 is configured to radially contain turbine airflow. The root 108 provides an area in which a dovetail 109 is machined. The dovetail 109 is used to attach the blade 100 to a turbine rotor disc (not illustrated). The airfoil 104 has two outer walls 110, 112 each having outer surfaces that together define an airfoil shape. The airfoil shape includes a leading edge 114, a trailing edge 116, a pressure side 118 along the first outer wall 110, a suction side 120 along the second outer wall 112, a blade tip 122, one or more pressure side discharge trailing edge slots 124, and an airfoil platform fillet 126.

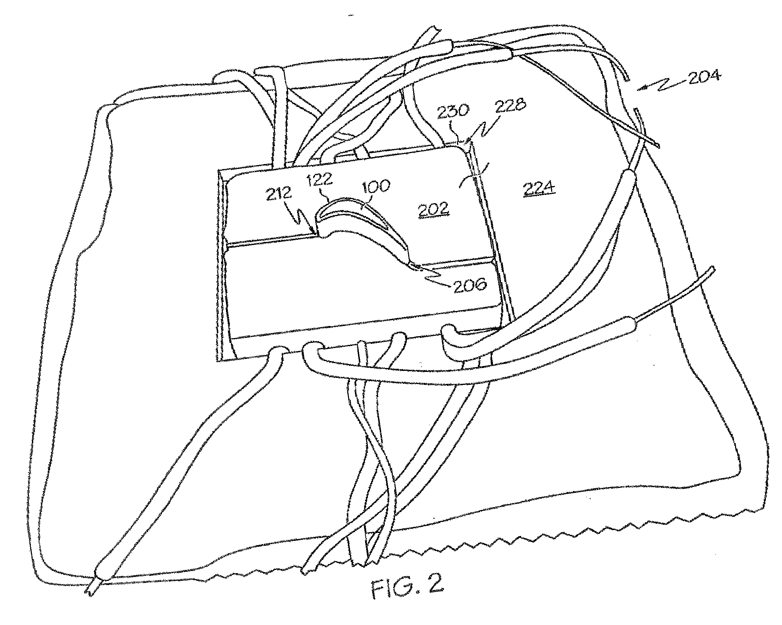

As briefly mentioned above, the blade 100 may occasionally become worn due to corrosion, oxidation, or erosion and the worn portion may need to be repaired. Before a repair process is performed on the blade 100, however, it is preferably heated to a predetermined temperature in a controlled manner. In this regard, the blade 100 is placed in a heating apparatus, such as the heating apparatus 200 shown in top view in FIG. 2.

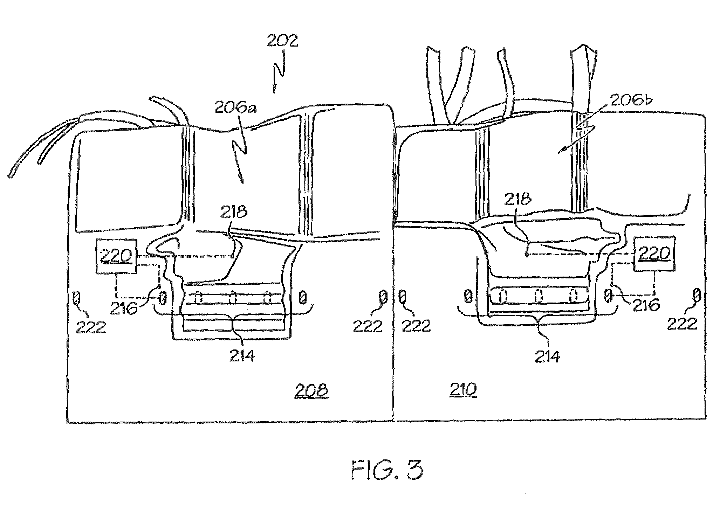

The heating apparatus 200 includes a die 202 and an insulator block 204. The die 202 is configured to surround and intimately contact a majority of the blade 100. Additionally, the die 202 is preferably made of a material that is capable of conducting heat and retaining structural integrity when exposed to temperatures in excess of a predetermined threshold temperature. It will be appreciated that the predetermined threshold temperature is dependent on the particular welding technique to be used. For example, some welding techniques require temperatures of greater than 1500°F; accordingly, the die 202 material preferably has a melting temperature in excess of 1500°F. Moreover, the die 202 material is preferably capable of being cast around the blade 100 to form a cavity 206 (see FIG. 3) in the die 202 that has a shape that is complementary to the shape of the blade 100. Suitable die 202 materials include, but are not limited to, for example, castable, fused-silica ceramic,

The die 202 is suitably cast from appropriate material, and is preferably split into multiple sections. In the embodiment shown in FIG. 3, two sections 208, 210 are included and, similar to a clamshell configuration, each half 208, 210 includes one half 206a, 206b of the cavity 206. It will be appreciated that although two sections 208, 210 are shown in FIG. 3, more may alternatively be formed. When the die 202 is assembled, it preferably includes an opening 212 (shown in FIG. 2) that allows a portion of the worn component to extend therethrough and to be exposed. Here, the blade tip 122 is shown extending through the die opening 212.

Each section 208,210 includes heating and control elements that are embedded therein. In one exemplary embodiment, the die sections 208, 210 each include a plurality of primary heating elements 214 (some of which are shown in phantom), a die temperature sensor 216, a component temperature sensor 218, and a controller 220. Additionally, each die section 208, 210 may include a plurality of secondary heating elements 222.

The primary heating elements 214 are configured, upon being energized, to heat the die 202 to a predetermined temperature. Preferably, the primary heating elements 214 are capable of heating the die 202 to temperatures proximate a typical weld operation temperature. It will be appreciated that any type of suitable high-temperature, resistive heating elements may be used, such as, for example, nickel-chrome alloy 675 (Nichrome 60). In other embodiments, the heating elements may alternatively be inductive or conductive heating elements. The primary heating elements 214 are embedded in the die 202, and are preferably positioned proximate the die cavity 206. Although only five heating elements 214 are shown, it will be appreciated that fewer or more may alternatively be employed.

The die temperature sensor 216, component temperature sensor 218 and controller 220 are configured to cooperate with each other to control the thermal output of the primary heating elements 214. The die temperature sensor 216 senses a temperature representative of the primary heating element temperature and transmits a signal representative of the sensed temperature to the controller 220. In this regard, the die temperature sensor 216 is embedded in the die 202 proximate to the primary heating elements 214 and is in operable communication with the controller 220. The component temperature sensor 218 senses a temperature representative of component temperature when the component, such as the blade 100, is disposed in the cavity 206 of the die 202 and is configured to transmit the thermal data to the controller 220. The component temperature sensor 218 is preferably embedded in the die 202 proximate the cavity 206. In one example, the component temperature sensor 218 is configured to contact the blade 100 when the blade 100 is disposed in the cavity 206, and thus includes a sensing portion that extends into the cavity 206. It will be appreciated that any one of numerous conventional thermocouples may be employed as the die temperature sensor 216 or the component temperature sensor 218. It will additionally be appreciated that any one of numerous other types of temperature sensors could also be used. For example one or more RTDs (resistance temperature detectors) or optical sensors could also be used.

Although the description above mentions the use of single die temperature sensor 216 and a single component temperature sensor 218, it will be appreciated that more may alternatively be incorporated into the apparatus 200. Each of the die temperature sensor 216, component temperature sensor 218, and primary heating elements 214 may be coupled to one another via wires (not shown). Preferably, the wires are embedded in the die 202 and remain operational when subjected to temperatures up to predetermined temperatures. It will also be appreciated that, in some embodiments, wireless communication could be used.

As mentioned above, the controller 220 receives temperature signals from both the die temperature sensor 216 and the component temperature sensor 218. The controller 220 is configured, in response to the temperature signals, to increase or decrease the power supplied to the primary heating elements 214. It will be appreciated that the controller 220 may be any one of numerous conventional devices suitable for receiving and processing temperature signals and controlling power supplied to the heating elements and may, in some embodiments, be computer-controlled.

In an alternate embodiment of the apparatus 200, secondary heating elements 222 are included in the die 202. The secondary heating element 222 are used to provide additional heat to supplement the heat supplied by the primary heating elements 214 to the die 202. Preferably, the secondary heating elements 222 are disposed, relative to the cavity 206, external to the primary heating elements 214 and are configured to remain at full power during apparatus 200 operation. Alternatively, heat output from the heating elements 222 may be controlled by a controller (not shown).

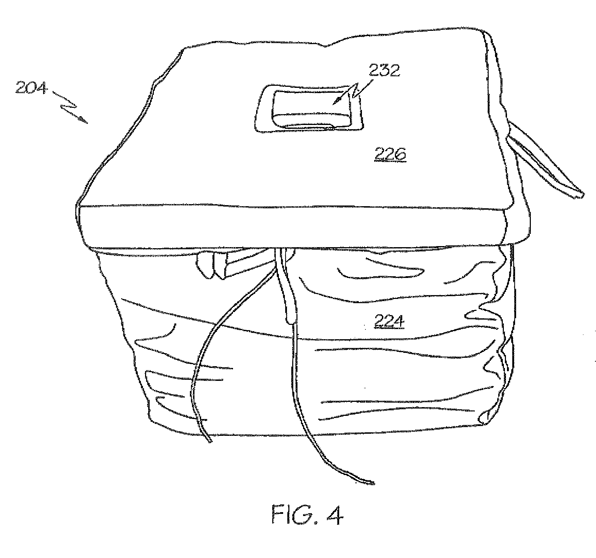

Heat is preferably maintained in the die 202, in part, by the insulator block 204. In this regard, the insulator block 204 preferably surrounds the die 202 on substantially all sides, while allowing access to the portion of the blade 100 to be welded. In the exemplary embodiment shown in FIG. 4, the insulator block 204 includes a box 224 and a lid 226 that are both made of insulating material such as, for example, Nextel^{™} fabric filled with ceramic batting (available through 3M Company of St. Paul, MN). Turning back to FIG. 2, the box 224 defines a cavity 228 that is sized to allow the die 202 to be disposed therein. An insert 230 may optionally be disposed in the cavity 228 to provide structural support to the box 224. The insert 230 may be made of any one of numerous suitable materials, such as, for example, stainless steel. As shown in FIG. 4, the lid 226 covers the top portion of the die 202 and includes an opening 232 that allows access to the blade 100 when it is assembled with the box 224.

As mentioned above, before a worn component, such as the blade 100, is repaired, it is first placed within the die 202. Specifically, the blade 100 is disposed in one section 208 of the die 202 and positioned in one half 206a of the cavity 206. Then, the other section 210 of the die 202 is assembled with the first section 208 to form the assembled die 202. It will be appreciated that the portion of the blade 100 to be repaired, for example, the blade tip 122, is exposed outside the die 202 while the remainder of the blade 100 outer surface remains in intimate contact with the die 202. The die 202 is then placed inside the box 224 section of the insulator block 204 (with structural support provided by the insert 230), while the wires (not illustrated) connected to the components in the die 202 are maintained outside of the box 224. The lid 226 is placed over the box 224.

Next, power is supplied to the primary heating elements 214, 222. In one exemplary embodiment, in which the blade 100 comprises a Ni-based superalloy, the primary heating elements 214 are preferably heated to a temperature in excess of 1800°F. If the temperature is too high or too low, the controller 220 automatically decreases or increases the power input to the primary heating elements 214. Heating continues until the component temperature sensor 218 senses that blade 100 temperature is at the pre-determined preheat temperature.

In another exemplary embodiment in which the secondary heating elements 222 are additionally incorporated, the secondary heating elements 222 are first heated to a predetermined temperature. Preferably, the secondary heating elements 222 are heated and maintained at a temperature of between about 800F and about 1000F. After the secondary heating elements 222 have achieved the desired temperature, the primary heating elements 214 are then heated. Similar to the previous embodiment, the primary heating elements 214 are preferably heated to a temperature in excess of 1800F, and if the temperature is too high or too low, the controller 220 automatically decreases or increases the power supplied to the primary heating elements 214 until the component temperature sensor 218 senses that blade 100 temperature is at the predetermined preheat temperature.

Once the blade 100 is sufficiently heated, a welding operation is performed on the blade tip 122. Any one of numerous welding operations may be performed. For example, laser welding, plasma transferred are welding, gas tungsten are welding, or any other welding process may be employed. After the welding operation has been performed, the repaired blade 100 is cooled. Preferably, the blade 100 is cooled in a controlled manner. For example, in embodiments in which secondary heating elements 222 are included, the secondary heating elements 222 are de-energized to allow the die 202 to cool, and then the controller 220 gradually decreases the power supplied to the primary heating elements 214 to gradually decrease heat output therefrom. After the die 202 is cooled, the repaired blade 100 is removed and any subsequent manufacturing operations necessary to restore the blade to serviceable condition (such as machining, coating restoration, etc.) are performed. Then, the blade is ready to be re-incorporated into an aircraft turbine engine.

An improved method and apparatus for use in the method have now been provided for heating a worn engine component during a welding repair process. The method and apparatus heat and cool the component in a controlled manner. Moreover, a repaired component is produced that has substantially no cracks after using the method and apparatus.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A heating apparatus (200) for use during performance of a welding operation on a component, the heating apparatus (200) comprising:
a die (202) having an inner surface defining a cavity (206) and an opening (212), the cavity (206) having at least a portion shaped to complement a first portion of the component and the opening (212) configured to provide a space through which a second portion of the component extends;
a primary heating element (214) embedded in the die (202), the primary heating element (214) configured to generate heat upon being energized;
a die temperature sensor (216) embedded in the die (202) proximate the primary heating element (214), the die temperature sensor (216) configured to sense primary heating element temperature and supply a primary heating element temperature signal representative thereof;
a component temperature sensor (218) embedded in the die (202), the component temperature sensor (218) configured to sense a temperature of the component in the cavity (206) and supply a component temperature signal representative thereof; and
a controller (220) coupled to receive the primary heating element temperature signal and the component temperature signal and operable, in response thereto, to selectively energize and de-energize the primary heating element (214).

2. The heating apparatus (200) of claim 1, wherein the die (202) comprises castable ceramic.

3. The heating apparatus (200) of claim 1, Wherein the die (202) comprises multiple sections (208, 210) configured to temporarily join together to form the die (202).

4. The heating apparatus (200) of claim 3, wherein each die section (208, 210) includes at least one primary heating element (214), die temperature sensor (216), component temperature sensor (218), and controller (220).

5. The heating apparatus (200) of claim 1, wherein the primary heating element (214) is disposed proximate the die inner surface.

6. The heating apparatus (200) of claim 5, further comprising a secondary heating element (222) embedded in the die (202) remote from the primary heating element (214) and configured to generate heat in excess of about 800°F, upon being energized.

7. The heating apparatus (200) of claim 1, further comprising insulation surrounding at least a portion of the die (202).

8. The heating apparatus (200) of claim 7, wherein the insulation composes an insulation block (204) including a box (224) and a lid (226), wherein the box (224) includes an inner surface that is configured to at least partially surround the die (202), and the lid (226) is configured to at least partially enclose the die (202) in the box (224).

9. The heating apparatus (200) of claim 8, wherein the lid (226) includes an opening (232) formed therethrough that aligns with the die opening (232).

10. The heating apparatus (200) of claim 9, further comprising an insert (230) disposed in the box (224).
